# EUROPEAN PATENT APPLICATION

(11) **EP 4 835 158 A1**
(43) Date of publication of application: **04.11.2026**
(21) Application number: 24913082.4
(22) Date of filing: 27.12.2024
(51) Int. Cl.: C25B 11/089, C25B 1/04, C25B 11/03, C25B 11/052, C25B 11/061

(54) **WATER ELECTROLYSIS ELECTRODE AND METHOD FOR MANUFACTURING WATER ELECTROLYSIS ELECTRODE**

(30) Priority: 28.12.2023 JP 2023222346
(71) Applicant: KABUSHIKI KAISHA TOYOTA JIDOSHOKKI, Kariya-shi, Aichi 448-8671 (JP)
(72) Inventor: SHIRAI, Keisuke, Kariya-shi, Aichi 448-8671 (JP); KONO, Satoshi, Kariya-shi, Aichi 448-8671 (JP); OKANISHI, Takeo, Kariya-shi, Aichi 448-8671 (JP); FUJII, Kairi, Kariya-shi, Aichi 448-8671 (JP); YASUDA, Shuichi, Kariya-shi, Aichi 448-8671 (JP); HONDA, Masaki, Kariya-shi, Aichi 448-8671 (JP)
(74) Representative: TBK
(86) International application number: PCT/JP2024/046342
(87) International publication number: WO 2025/143196

(57) **Abstract**

A water electrolysis electrode includes a substrate and a catalyst portion, the catalyst portion includes Raney nickel particles and metal particles containing nickel as a main component, the metal particles are in contact with the Raney nickel particles, the metal particles contain aluminum, and a ratio of a total number of moles of aluminum to a total number of moles of nickel in the Raney nickel particles is larger than a ratio of a total number of moles of aluminum to a total number of moles of nickel in the metal particles.

## Description

### TECHNICAL FIELD

The present disclosure relates to a water electrolysis electrode and a method for manufacturing the water electrolysis electrode.

### BACKGROUND ART

Water electrolysis is a process of electrolyzing water into hydrogen and oxygen, and used, for example, as a technology for producing hydrogen. A water electrolysis apparatus for generating hydrogen includes, for example, an electrolytic cell in which an electrolyte solution such as alkaline water is contained, and an anode and a cathode arranged in the electrolytic cell with a separator interposed therebetween. In the water electrolysis apparatus, current is caused to flow between the anode and the cathode, which causes oxygen to be generated at the anode and hydrogen to be generated at the cathode.

Japanese Patent Laying-Open No. S53-54174 (PTL 1) discloses a water electrolysis electrode in which an oxidized material is bound with a binder, where the oxidized material is generated by eluting an alkali-soluble component from a Raney nickel alloy powder and oxidizing the eluted component.

### CITATION LIST

### PATENT LITERATURE

PTL 1: Japanese Patent Laying-Open No. S53-54174

### SUMMARY OF INVENTION

### TECHNICAL PROBLEM

Water electrolysis electrodes are required to have a higher activity and a longer life (improved durability). The water electrolysis electrode described in PTL 1 has room for improvement, particularly from the viewpoint of increasing its activity.

An object of the present disclosure is to provide a water electrolysis electrode exhibiting high activity and a method for manufacturing the water electrolysis electrode.

### SOLUTION TO PROBLEM

An electrolysis electrode for solving the above problem includes a substrate and a catalyst portion, the catalyst portion includes Raney nickel particles and metal particles containing nickel as a main component, the metal particles are in contact with the Raney nickel particles, the metal particles contain aluminum, and a ratio of a total number of moles of aluminum to a total number of moles of nickel in the Raney nickel particles is larger than a ratio of a total number of moles of aluminum to a total number of moles of nickel in the metal particles.

The water electrolysis electrode includes the substrate and the catalyst portion. The catalyst portion includes Raney nickel particles and metal particles containing nickel as a main component. The Raney nickel particles have high activity. The metal particles are a binder that binds the Raney nickel particles to the substrate.
Since the catalyst portion includes the Raney nickel particles and the metal particles, improvement in activity is expected. Moreover, since the Raney nickel particles and the metal particles satisfy the specific relationship indicated above, further improvement in activity is expected.

A method for manufacturing a water electrolysis electrode includes: a mixing step of obtaining a slurry by mixing a raw material for Raney nickel particles, a raw material for metal particles containing nickel as a main component, and a solvent; a water electrolysis electrode precursor forming step of obtaining a water electrolysis electrode precursor by coating the substrate with the slurry; and an alkali treatment step of obtaining a water electrolysis electrode including Raney nickel particles by treating the water electrolysis electrode precursor with an alkaline substance, and a number of moles of aluminum contained in the raw material for the Raney nickel particles is larger than a number of moles of nickel contained in the raw material for the Raney nickel particles.

### ADVANTAGEOUS EFFECTS OF INVENTION

According to the present disclosure, a water electrolysis electrode exhibiting high activity and a method for manufacturing the water electrolysis electrode are obtained.

### BRIEF DESCRIPTION OF DRAWINGS

[Fig. 1] Fig. 1 is an example of an SEM image of a cross section of a water electrolysis electrode of the present disclosure.
[Fig. 2] Fig. 2 is an example of element mapping images obtained by EDX of the SEM image in Fig. 1.
[Fig. 3] Fig. 3 is a graph showing results of evaluation of activity of water electrolysis electrodes in Test Example 2.
[Fig. 4] Fig. 4 is a graph showing results of evaluation of durability of the water electrolysis electrodes in Test Example 2.
[Fig. 5] Fig. 5 is a graph showing results of evaluation of activity of water electrolysis electrodes in Test Example 3.
[Fig. 6] Fig. 6 is a graph showing results of evaluation of durability of the water electrolysis electrodes in Test Example 3.
[Fig. 7] Fig. 7 is a graph showing results of evaluation of activity of water electrolysis electrodes in Test Example 4.
[Fig. 8] Fig. 8 is a graph showing results of evaluation of durability of the water electrolysis electrodes in Test Example 4.
[Fig. 9] Fig. 9 is a graph showing results of evaluation of activity of water electrolysis electrodes in Test Example 5.
[Fig. 10] Fig. 10 is a graph showing results of evaluation of durability of the water electrolysis electrodes in Test Example 5.

### DESCRIPTION OF EMBODIMENTS

In the following, an embodiment(s) of the present disclosure (may be abbreviated as "the present embodiment" hereinafter) and an example(s) of the present disclosure (may be abbreviated as "the present example" hereinafter) are described. It should be noted that the present embodiment and the present example do not limit the technical scope of the present disclosure.

A water electrolysis electrode of the present embodiment is used as an electrode for electrolysis in a water electrolysis apparatus. The water electrolysis electrode of the present embodiment is used suitably in an alkaline water electrolysis apparatus.

The average particle size of a Raney alloy refers to a particle size at a cumulative value of 50% in a particle size distribution determined by the laser diffraction and scattering method. The average particle size of a raw material for metal particles refers to a particle size measured by the Fisher method. The average particle size of Raney nickel particles and the average particle size of the metal particles refer to respective arithmetic averages of the minor axis size of any 100 Raney nickel particles and any 100 metal particles, respectively, extracted from SEM images obtained by means of a scanning electron microscope (SEM).

### <Water Electrolysis Electrode>

The water electrolysis electrode of the present embodiment includes a substrate and a catalyst portion. The catalyst portion includes Raney nickel particles, and metal particles containing nickel as a main component (hereinafter also referred to simply as "metal particles"). The metal particles are in contact with the Raney nickel particles. The metal particles contain aluminum. A ratio of the total number of moles of aluminum to the total number of moles of nickel in the Raney nickel particles is larger than a ratio of the total number of moles of aluminum to the total number of moles of nickel in the metal particles. It should be noted that a ratio of the total number of moles of aluminum to the total number of moles of components including nickel, other than aluminum, in the Raney nickel particles, is larger than a ratio of the total number of moles of aluminum to the total number of moles of components including nickel, other than aluminum, in the metal particles.

The water electrolysis electrode of the present embodiment may be a water electrolysis electrode in which the catalyst portion is dispersed in the substrate, or may be a water electrolysis electrode in which a layer formed by the catalyst portion is formed on a surface of the substrate. Moreover, the water electrolysis electrode of the present embodiment is obtained by coating the substrate with a slurry containing a raw material for Raney nickel particles and a raw material for metal particles, and performing an alkali treatment thereon, as described later herein in connection with a method for manufacture.

### <<Substrate>>

The substrate of the present embodiment is an electrical conductor that allows electricity to flow therethrough. The substrate is not particularly limited as long as it has electrical conductivity, and examples thereof include metals containing Ni, such as nickel metal and nickel alloys. The entire substrate may be formed of nickel metal or a nickel alloy, or only the surface of the substrate may be formed of nickel metal or a nickel alloy. In the substrate in which only the surface is formed of nickel metal or a nickel alloy, the surface of a metal material such as iron or stainless steel may be coated with the nickel metal or the nickel alloy. The substrate preferably contains nickel metal or a nickel alloy as a main component. The substrate is preferably made of nickel metal having a higher Ni purity for the sake of durability against the environment in which the substrate is used. It should be noted that "containing nickel metal or a nickel alloy as a main component" means that the Ni content in the nickel metal or the nickel alloy in the substrate is more than 50% by mass.

The shape of the substrate is not particularly limited, and may be porous or non-porous. The substrate is preferably porous so that Raney nickel particles and metal particles containing Ni can be contained in the substrate. Examples of such a substrate shape include punched metal, mesh, foam metal, expanded metal, and the like. Examples of the shape of the non-porous substrate include sheet shape and the like.

The thickness of the substrate is not particularly limited, and may be a thickness suitable for a water electrolysis apparatus to be used.

### <<Catalyst Portion>>

The catalyst portion includes Raney nickel particles, and metal particles containing Ni as a main component. The catalyst portion may be substantially composed of Raney nickel particles and metal particles. The catalyst portion may be composed of Raney nickel particles and metal particles. In the catalyst portion, the Raney nickel particles are in contact with the metal particles. It should be noted that "substantially composed of Raney nickel particles and metal particles" means that the content of Raney nickel particles and metal particles in the catalyst portion is 95% by mass or more.

### (Raney Nickel Particles)

The Raney nickel particles of the present embodiment contain Ni and Al. The Raney nickel particles are each a porous body having many pores formed therein and having a large specific surface area, and exhibit high activity.

A ratio of the total number of moles of Al to the total number of moles of Ni in the Raney nickel particles of the present embodiment (hereinafter also referred to as "first Al/Ni ratio") is 1 or less, preferably 0.6 or less. From the fact that the first Al/Ni ratio is 1 or less, it is expected that the activity is improved. The first Al/Ni ratio may be, for example, 0.005 or more, or 0.01 or more. The first Al/Ni ratio can be identified, for example, by scanning electron microscopy-energy dispersive X-ray spectroscopy (SEM-EDX).

The Raney nickel particles of the present embodiment may contain a first metal other than Ni and Al. From the fact that the Raney nickel particles contain the first metal, it is expected that the activity is further improved. Examples of such a first metal include magnesium (Mg), silicon (Si), titanium (Ti), chromium (Cr), manganese (Mn), iron (Fe), cobalt (Co), copper (Cu), silver (Ag), platinum (Pt), gold (Au), and the like. The proportion of the first metal contained in the Raney nickel particles is equal to the proportion of the first metal contained in the raw material for the Raney nickel particles (the raw material is also referred to as "Raney alloy" hereinafter). In the Raney nickel particles containing the first metal, the molar ratio between Ni and the first metal may be, for example, 1.99:0.01 to 1.15:1.85. The molar ratio between Ni and the first metal is preferably 1.99:0.05 to 1.5:0.5.

The Raney nickel particles of the present embodiment may be an alloy composed of a single phase or an alloy composed of a plurality of phases. Examples of such a phase(s) include a phase composed of only nickel, a phase composed of nickel and aluminum, a phase composed of nickel and the first metal, a phase composed of nickel, aluminum, and the first metal, and the like. The phase(s) constituting the Raney nickel particles and the composition thereof can be identified, for example, by SEM-EDX.

The BET specific surface area of the Raney nickel particles of the present embodiment is, for example, 0.05 m²/g or more and 100 m²/g or less. It should be noted that the BET specific surface area refers to the surface area per unit mass of the Raney nickel particles measured with N₂ adsorption by the BET method.

The average particle size of the Raney nickel particles of the present embodiment is 5 µm or more and 100 µm or less. If the average particle size of the Raney nickel particles is less than 5 µm, corrosion may occur in the catalyst portion, resulting in deterioration in the durability. If the average particle size of the Raney nickel particles exceeds 100 µm, the activity may decrease because the surface area of the catalyst portion is small. The average particle size of the Raney nickel particles may be 8 µm or more and 85 µm or less, 10 µm or more and 50 µm or less, 10 µm or more and 30 µm or less, or 15 µm or more and 30 µm or less.

### [Raney Alloy]

Raney nickel particles are generally obtained by treating a Raney alloy containing Ni and a metal element soluble in alkali with an alkaline substance to elute the metal element soluble in alkali from the Raney alloy. The metal element soluble in alkali is preferably a metal element having a higher ionization tendency than Ni. Examples of the metal element soluble in alkali include amphoteric metals (aluminum (Al), zinc (Zn), tin (Sn), and lead (Pb)) and the like.

The Raney nickel particles of the present embodiment are obtained by treating a Raney alloy containing Ni and Al with an alkaline substance to elute Al from the Raney alloy. The Raney alloy may contain the first metal.

If the proportion of Al in the Raney alloy containing Ni and Al is high, the voidage of the Raney nickel particles obtained by eluting Al is high, that is, the specific surface area is large. Therefore, from the viewpoint of obtaining Raney nickel particles exhibiting higher activity, it is preferable to use a Raney alloy having a high proportion of aluminum.

In contrast, if the proportion of Al in the Raney alloy containing Ni and Al is low, the voidage of the Raney nickel particles obtained by eluting Al is low, that is, the specific surface area is small. Therefore, from the viewpoint of obtaining Raney nickel particles having high durability (strength), it is preferable to use a Raney alloy having a low proportion of Al.

In the present embodiment, from the viewpoint of obtaining Raney nickel particles exhibiting high activity while maintaining durability, the number of moles of Al contained in the Raney alloy is preferably larger than the number of moles of Ni contained in the Raney alloy. From such a viewpoint, in the present embodiment, it is also preferable to use a Raney alloy represented by the following Formula (1).

Al₃Ni₍₂₋ₓ₎₎Mₓ (1)

In the above Formula (1), M is at least one element selected from Mg, Si, Ti, Cr, Mn, Fe, Co, Cu, Ag, Pt, and Au, and x satisfies a relationship: 0 ≤ x ≤ 0.2.

The element M is preferably at least one element selected from Fe and Co. This is because reduction in the amount used and reduction in the cost are expected, in addition to improvement in the activity. More preferably, the element M includes at least Fe. From such a viewpoint, in the present embodiment, it is more preferable to use a Raney alloy represented by the following Formula (2).

Al₃Ni_{(2-(y+z))}Fe_{y}Co_{z} (2)

In the above Formula (2), y and z satisfy a relationship: 0 ≤ y ≤ 0.1 and 0 ≤ z ≤ 0.1.

The Raney alloy is, for example, in a powder form. The average particle size of the Raney alloy of the present embodiment is 5 µm or more and 100 µm or less. If the average particle size of the Raney alloy is less than 5 µm, corrosion may occur in the catalyst portion, resulting in deterioration in the durability. If the average particle size of the Raney alloy exceeds 100 µm, the activity may decrease because the surface area of the catalyst portion is small. The average particle size of the Raney alloy may be 8 µm or more and 85 µm or less, 10 µm or more and 50 µm or less, 10 µm or more and 30 µm or less, or 15 µm or more and 30 µm or less.

The method for manufacturing the Raney alloy is not particularly limited, and a known method for manufacturing an alloy can be applied. Examples of the method for manufacturing the Raney alloy include casting method, rapid cooling method, mechanical alloying method, sputtering method, and the like.

### (Metal Particles)

The metal particles of the present embodiment contain Ni as a main component. The metal particles are in contact with the Raney nickel particles. Preferably, the metal particles are each in contact with more than one of the Raney nickel particles. The metal particles have a function of a binder that binds Raney nickel particles dispersed in the water electrolysis electrode to each other or binds the Raney nickel particles to the substrate. This function is explained as follows. It should be noted that "containing Ni as a main component" means that the Ni content in the metal particles is more than 50% by mass.

When the Raney alloy (Raney nickel particles) and the metal particles contain a metal other than Ni (the metal is hereinafter also referred to as "additive element") and thermal energy is applied to them, impurity diffusion occurs where the additive element is regarded as an impurity. That is, when thermal energy from firing or the like is applied to cause thermal oscillation of atoms of the additive element, the additive element diffuses from the Raney alloy into the raw material for the metal particles (or from the Raney nickel particles into the metal particles), due to a concentration gradient of the additive element between the Raney alloy and the raw material for the metal particles (or between the Raney nickel particles and the metal particles). Therefore, even for different types of substances such as the metal particles and the Raney nickel particles (or the Raney alloy and the raw material for the metal particles), the Raney alloy and the raw material for the metal particles (or the Raney nickel particles and the metal particles) are bound by the surface diffusion of the additive element if they are in contact with each other. Accordingly, the surface area of the catalyst portion is improved, and improvement in the activity of the water electrolysis electrode is expected. Moreover, since the Raney alloy and the raw material for the metal particles (or the Raney nickel particles and the metal particles) are strongly bound together, their falling off from the substrate is suppressed, and accordingly, improvement in the durability of the water electrolysis electrode is also expected.

The metal particles of the present embodiment contain Al. That is, in the present embodiment, the concentration gradient of Al serves as a driving force to cause Al atoms to diffuse from the Raney nickel particles, which have a larger amount of Al than the metal particles (or the raw material for the metal particles), into the metal particles (or from the Raney alloy into the raw material for the metal particles). Since the metal particles (or the raw material for the metal particles) contain Al, the function of the metal particles as a binder is improved, and accordingly, a stronger electron conduction path is formed, and further improvement in the activity of the water electrolysis electrode is expected. Moreover, since the Raney nickel particles and the metal particles (or the Raney alloy and the raw material for the metal particles) are more strongly bound, improvement in the durability of the water electrolysis electrode is also expected.

A ratio of the total number of moles of Al to the total number of moles of Ni in the metal particles of the present embodiment (hereinafter also referred to as "second Al/Ni ratio") is 0.4 or less, preferably 0.35 or less. From the fact that the second Al/Ni ratio is 0.4 or less, improvement in the activity is expected. The second Al/Ni ratio may be, for example, 0.005 or more, or 0.01 or more. The second Al/Ni ratio can be identified, for example, by SEM-EDX.

The metal particles preferably contain Al in their surfaces. From the fact that Al is contained in the surfaces of the metal particles, it is expected that the function of the metal particles as a binder for binding the Raney nickel particles to each other or for binding the Raney nickel particles to the substrate is further improved.

The average particle size of the metal particles is preferably smaller than the average particle size of the Raney nickel particles. When the average particle size of the metal particles is smaller than the average particle size of the Raney nickel particles, the metal particles can enter gaps between the Raney nickel particles. As a result, the metal particles and the Raney nickel particles can be in denser contact with each other, and the function of the metal particles as a binder is expected to be further improved. The average particle size of the metal particles may be one-fifth or less, or one-tenth or less of the average particle size of the Raney nickel particles. The average particle size of the metal particles is 1 µm or more and 10 µm. The average particle size of the metal particles may be 1 µm or more and 5 µm or less, 1.5 µm or more and 3.5 µm or less, or 2 µm or more and 3 µm or less. The average particle size of the metal particles is preferably 2 µm or more and 3 µm or less. When the average particle size of the metal particles is 2 µm or more and 3 µm or less, improvement in the durability is expected. It should be noted that, in some cases, the metal particles are bonded to each other and accordingly the average particle size of the metal particles becomes larger than the average particle size of the Raney nickel particles.

### [Raw Material for Metal Particles]

The number of moles of Al in the raw material for the metal particles is preferably smaller than the number of moles of Al in the Raney alloy. When the number of moles of Al in the raw material for the metal particles is smaller than the number of moles of Al in the Raney alloy, Al diffuses, in the method for manufacturing a water electrolysis electrode described later herein, from the Raney alloy into the raw material for the metal particles because of the concentration gradient, to accordingly form the metal particles and, as a result, a stronger electron conduction path is formed, and further improvement in the activity and the durability of the water electrolysis electrode is expected.

The raw material for the metal particles may be substantially composed of nickel, that is, nickel metal containing Ni as a main component, such as pure nickel. Since nickel metal is an alkali-resistant metal, it does not corrode even during use, and accordingly, further improvement in the activity and the durability of the water electrolysis electrode is expected. It should be noted that "substantially composed of nickel" and "composed of nickel metal containing Ni as a main component, such as pure nickel" mean that the Ni content in the metal particles is 95% by mass or more.

The raw material for the metal particles is, for example, in a powder form.
The average particle size of the raw material for the metal particles is preferably smaller than the average particle size of the Raney alloy. When the average particle size of the raw material for the metal particles is smaller than the average particle size of the Raney alloy, the metal particles can enter gaps between the Raney nickel particles obtained from these raw materials, and the function of the metal particles as a binder is expected to be further improved. The average particle size of the raw material for the metal particles may be one-fifth or less, or one-tenth or less of the average particle size of the Raney nickel particles. The average particle size of the raw material for the metal particles may be 1 µm or more and 5 µm or less, 1.5 µm or more and 3.5 µm or less, or 2 µm or more and 3 µm or less. The average particle size of the metal particles is preferably 2 µm or more and 3 µm or less. When the average particle size of the metal particles is 2 µm or more and 3 µm or less, improvement in the durability is expected.

### <<First Al/Ni Ratio and Second Al/Ni Ratio>>

The first Al/Ni ratio is larger than the second Al/Ni ratio. That is, the number of moles of Al contained in the Raney nickel particles is larger than the number of moles of Al contained in the metal particles. As a result of the improvement in the function of the metal particles as a binder, a stronger electron conduction path is formed, and further improvement in the activity of the water electrolysis electrode is expected. Moreover, since the Raney nickel particles and the metal particles are more strongly bound together, improvement in the durability of the water electrolysis electrode is also expected.

### <<Ratio of Al to Ni in Water Electrolysis Electrode>>

A ratio of the total number of moles of Al to the total number of moles of Ni in the water electrolysis electrode of the present embodiment (hereinafter also referred to as "third Al/Ni ratio") is preferably 0.006 or more and 0.45 or less. When the third Al/Ni ratio falls within the above range, improvement in the activity of the water electrolysis electrode is expected. It should be noted that the total number of moles of Ni in the water electrolysis electrode is the total number of moles of Ni contained in the substrate, the Raney nickel particles, and the metal particles containing Ni, and the total number of moles of Al is the total number of moles of Al contained in the Raney nickel particles and the metal particles containing Ni.

### <<Cross-Section Observation>>

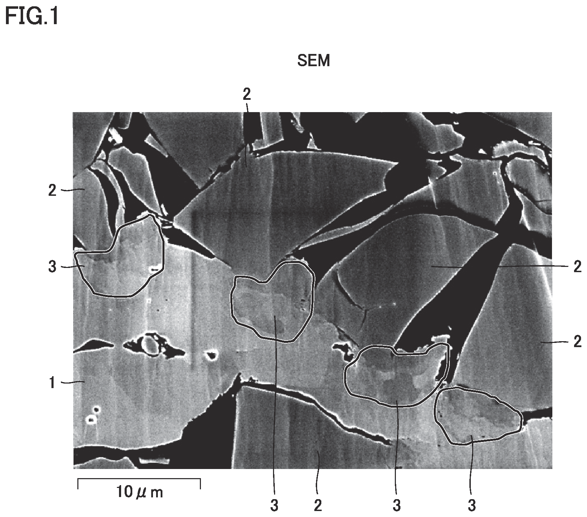

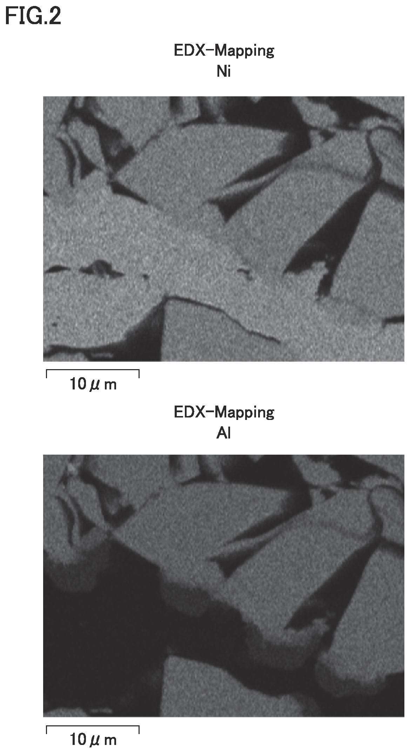

Fig. 1 is an example of an SEM image of a cross section of the water electrolysis electrode of the present embodiment, and Fig. 2 is an example of element mapping images obtained by EDX of the SEM image in Fig. 1. It should be noted that in this water electrolysis electrode, a substrate 1 made of Ni, a Raney alloy having a composition of Al₃Ni₂, and a raw material for metal particles made of Ni were used as raw materials.

From the images of Figs. 1 and 2, it can be confirmed that metal particles 3 function as a binder so as to prevent Raney nickel particles 2 from falling off from the substrate 1. Moreover, it can be confirmed that a trace amount of Al is contained in the metal particles 3 containing Ni. That is, it is considered that Al contained in the Raney alloy, which is a raw material for the Raney nickel particles, diffuses into the raw material for the metal particles, thereby forming the metal particles 3.

### <<Anode for Water Electrolysis>>

The water electrolysis electrode of the present embodiment may be used as an anode for water electrolysis.

In the anode for water electrolysis of the present embodiment, a ratio of the raw material for the metal particles to the total of the Raney alloy and the raw material for the metal particles may be, for example, 27% by mass or more and 95% by mass or less. When the ratio of the Raney nickel particles to the total of the Raney nickel particles and the metal particles falls within the above range, the anode for water electrolysis exhibiting higher activity can be obtained. The ratio of the metal particles to the total of the Raney nickel particles and the metal particles may be 33% by mass or more, or may be 40% by mass or more. The ratio of the Raney nickel particles to the total of the Raney nickel particles and the metal particles may be 92% by mass or less, or may be 85% by mass or less.

### <<Cathode for Water Electrolysis>>

The water electrolysis electrode of the present embodiment may be used as a cathode for water electrolysis.

In the cathode for water electrolysis of the present embodiment, a ratio of the metal particles to the total of the Raney nickel particles and the metal particles may be, for example, 27% by mass or more and 95% by mass or less. When the ratio of the Raney nickel particles to the total of the Raney nickel particles and the metal particles falls within the above range, the cathode for water electrolysis exhibiting higher activity can be obtained. The ratio of the metal particles to the total of the Raney nickel particles and the metal particles may be 30% by mass or more, or may be 35% by mass or more. The ratio of the Raney nickel particles to the total of the Raney nickel particles and the metal particles may be 95% by mass or less, or may be 90% by mass or less.

### <Method for Manufacturing Water Electrolysis Electrode>

A method for manufacturing a water electrolysis electrode in the present embodiment includes at least (a) mixing step, (b) water electrolysis electrode precursor forming step, and (c) alkali treatment step. The (b) water electrolysis electrode precursor forming step further includes (b-1) drying step and (b-2) firing step. The (b) water electrolysis electrode precursor forming step may include (b-3) scraping-off step and (b-4) pressing step. Further, (d) oxidation step may be included after the (c) alkali treatment step.

### <<(a) Mixing Step>>

In the mixing step, a slurry is obtained by mixing a Raney alloy, a raw material for metal particles containing Ni as a main component, and a solvent. The Raney alloy, the raw material for the metal particles containing Ni, and the substrate are those as described above. Examples of the solvent include water, N-methyl-2-pyrrolidone (NMP), N-ethyl-2-pyrrolidone (NEP), and the like.

The slurry may further include a thickening agent. Examples of the thickening agent include carboxymethylcellulose (CMC), polytetrafluoroethylene (PTFE), polyvinylidene fluoride (PVDF), and the like.

In this step, it is preferable to use a substrate with a low weight per unit area and a slurry with a high viscosity (high concentration). Use of the substrate and the slurry as described above allows the slurry to easily penetrate into the substrate in a coating step described later herein. Reasons for this are considered to be the following. That is, the lower the weight per unit area, the higher the porosity of the substrate. The higher the porosity of the substrate, the larger the amount of the slurry carried therein (the amount of a catalyst portion carried therein), and accordingly, higher activity is expected. Moreover, the higher the viscosity (concentration) of the slurry, the higher the concentration of the catalyst portion in the slurry, which makes it easier for the Raney nickel particles and the metal particles to contact each other, and accordingly, improvement in the durability is expected. Furthermore, use of the substrate with a low weight per unit area enables the high porosity to be maintained in the water electrolysis electrode even when the slurry with the high viscosity penetrates therein, and accordingly, high activity is expected. It should be noted that "low weight per unit area" refers to, for example, 100 g/m² or more and 600 g/m² or less, preferably 200 g/m² or more and 400 g/m² or less. "High viscosity" refers to, for example, the fact that the proportion of the solvent in the slurry is 10% by mass or more and 50% by mass or less, preferably 20% by mass or more and 45% by mass or less.

### <<(b) Water Electrolysis Electrode Precursor Forming Step>>

In the water electrolysis electrode precursor forming step, a water electrolysis electrode precursor is obtained by coating the substrate with the slurry obtained in the mixing step.

In this step, a surface of the substrate is coated with the slurry by an arbitrary coating apparatus. The coating with the slurry may be performed using a known coating apparatus such as die coater, roll coater, knife coater, blade coater, bar coater, spray coater, screen printer, or the like, or may be performed, for example, by immersing the substrate in the slurry. The whole of the surface of the substrate may be coated with the slurry, or a part of the surface of the substrate may be coated with the slurry. When the substrate is in a sheet shape, one side or both sides of the substrate may be coated with the slurry. When the substrate is a porous substrate, the substrate coated with the slurry may be pressed, for example, to cause the pores of the substrate to be impregnated with the slurry. When the substrate is a porous substrate, the slurry remaining on the surface of the substrate without impregnating the pores may be scraped off using a spatula or the like.

### <<(b-1) Drying Step>>

In the drying step, the substrate including the slurry (water electrolysis electrode precursor) is dried. For example, the slurry may be dried by a hot air drying oven, an infrared dryer, a hot plate, or the like. The drying temperature may be, for example, 40°C or more and 120°C or less. The drying time may be, for example, 1 minute or more and 300 minutes or less.

### <<(b-2) Firing Step>>

In the firing step, the water electrolysis electrode precursor after being subjected to the drying step is fired (heat-treated). The firing enables the slurry to penetrate uniformly throughout the substrate, which makes it less likely that the thickness of the substrate becomes nonuniform. Moreover, the firing may cause Al contained in the Raney alloy to diffuse into the raw material for the metal particles because of the concentration gradient, and thereby form the metal particles.

The firing temperature may be, for example, 600°C or more and 900°C or less. The firing time may be, for example, 1 hour or more and 24 hours or less.

### <<(b-3) Scraping-off Step>>

In the scraping-off step, the slurry remaining on the surface of the substrate is scraped off. For scraping off, for example, a spatula or the like may be used. The scraping-off step may be performed before or after a pressing step described below, and whether to perform this step or not may be determined as appropriate.

### <<(b-4) Pressing Step>>

In the pressing step, the substrate including the slurry (water electrolysis electrode precursor) is pressed. The pressing step may be performed at any timing during the water electrolysis electrode precursor forming step. The thickness of the substrate is adjusted by pressing. The pressure can be adjusted as appropriate depending on a desired thickness of the substrate or the amount of slurry carried therein.

### <<(c) Alkali Treatment Step>>

In the alkali treatment step, the water electrolysis electrode precursor is treated with an alkaline substance. The alkali treatment causes aluminum to be eluted from the Raney alloy, so that Raney nickel particles can be obtained. That is, a water electrolysis electrode including Raney nickel particles is obtained.

A specific treatment method may include, for example, placing the water electrolysis electrode precursor in an alkaline aqueous solution containing an alkaline substance, and thereafter stirring them for a predetermined time at a predetermined temperature of the alkaline aqueous solution. Examples of the alkaline substance include alkali metal hydroxides, alkali metal salts, and the like. Examples of the alkali metal hydroxides include sodium hydroxide, potassium hydroxide, lithium hydroxide, and the like. Examples of the alkali metal salts include sodium carbonate, potassium carbonate, lithium carbonate, and the like. The alkaline substance is preferably an alkali metal hydroxide.

The treatment temperature is, for example, 100°C or more and 140°C or less. The treatment time is, for example, 1 hour or more and 9 hours or less. The amount of the alkaline substance used in this step may be adjusted as appropriate.

In this step, it is preferable to perform the treatment at a high temperature using a high-concentration alkaline aqueous solution of an alkali metal hydroxide. The concentration of the alkaline aqueous solution is, for example, 3 mol/L or more, preferably 7 mol/L or more, and more preferably 14 mol/L or more. The concentration of the alkaline aqueous solution is 20 mol/L or less. The treatment temperature is, for example, 100°C or more, preferably 110°C or more, and more preferably 125°C or more. The treatment temperature is, for example, 148°C or less. It should be noted that in order to increase the treatment temperature, it is necessary to increase the concentration of the alkaline aqueous solution to make the boiling point of the alkaline aqueous solution equal to or higher than the treatment temperature. For example, when the treatment temperature is 100°C or more, the concentration of the alkaline aqueous solution is preferably 3 mol/L or more and, when the treatment temperature is 125°C or more, the concentration of the alkaline aqueous solution is preferably 14 mol/L or more. Moreover, this step is preferably performed under normal pressure. In this case, hydrogen generated during the treatment can be easily removed as compared with the case where pressure is applied.

By performing this step under such conditions, it is possible to shorten the time for reaction between the alkaline aqueous solution and the Raney alloy. The time for reaction is, for example, 3 hours or more and 9 hours or less when the concentration of the alkaline aqueous solution is 3 mol/L or more and the treatment temperature is 100°C or more, and is, for example, 1 hour or more and 8 hours or less when the concentration of the alkaline aqueous solution is 14 mol/L or more and the treatment temperature is 125°C or more.

It should be noted that this step may elute all Al contained in the Raney alloy, or may allow a part of Al to remain without being eluted.

### <<(d) Oxidation Step>>

Since the Raney nickel particles (substrate including the Raney nickel particles) obtained by the alkali treatment step have high surface activity, there is a risk of spontaneous ignition in air. Therefore, handling of them while being stored, for example, is difficult, and it is necessary to handle them so as not to bring them into contact with air, by storing them in a solvent, for example.

In the oxidation step, the surfaces of the Raney nickel particles obtained by the alkali treatment step are oxidized. For the Raney nickel particles whose surfaces are oxidized (hereinafter also referred to as "oxidized Raney nickel particles"), spontaneous ignition of them in air is suppressed. Therefore, the oxidized Raney nickel particles are easier to handle during storage or the like as compared with the Raney nickel particles.

This step is performed, for example, by reacting the Raney nickel particles with an acidic aqueous solution containing an acidic substance. A specific treatment method may include, for example, placing the water electrolysis electrode after the alkali treatment step in an acidic aqueous solution, and thereafter stirring them for a predetermined time at a predetermined temperature.

Examples of the acidic substance include hydrogen peroxide, sodium peroxide, sodium percarbonate, sodium perborate, and the like. The acidic substance is preferably hydrogen peroxide among them.

The concentration of the acidic aqueous solution is, for example, 0.1 mol/L or more and 10 mol/L or less. The treatment temperature is, for example, 15°C or more and 80°C or less. The treatment time is, for example, 5 minutes or more and 720 minutes or less. The solid-liquid ratio of the Raney nickel particles to the acidic aqueous solution (Raney nickel particles : acidic aqueous solution) is, for example, 1:2 to 1: 100 by mass ratio.

The oxidized Raney nickel particles (the water electrolysis electrode including the oxidized Raney nickel particles) obtained by the above treatment may be subjected to a cleaning treatment as required. As the cleaning treatment, a known cleaning treatment used for manufacturing Raney nickel particles, such as a water cleaning treatment, can be applied.

It should be noted that the above-described method for manufacturing a water electrolysis electrode in the present embodiment is merely an example and the method is not limited to the above-described one. For example, a catalyst layer composed of Raney nickel particles and metal particles may be formed on the surface of the substrate by coating the surface of the substrate with the slurry.

### EXAMPLES

### <Raw Materials>

Materials used in the present example are as follows.

### <<Substrate>>

A: Porous metal body made of nickel (manufactured by Sumitomo Electric Industries, Ltd., CELMET (registered trademark), product number #8) (size: 50 mm × 50 mm, thickness: 1.2 mm)

### <<Raney Alloy>>

B1: Nickel-aluminum alloy with a composition formula of Al₃Ni₂ (manufactured by Japan Metals & Chemicals Co., Ltd., average particle size: 23 µm)
B2: Nickel-aluminum-iron alloy with a composition formula of Al₃Ni_{1.95}Fe_{0.05} (manufactured by Japan Metals & Chemicals Co., Ltd., average particle size: 23 µm)
B3: Nickel-aluminum alloy (manufactured by FUJIFILM Wako Pure Chemical Corporation, Raney nickel particles, approx. 50%) (average particle size: 19 µm)
B4: Nickel-aluminum-iron alloy with a composition formula of Al₃Ni_{1.95}Fe_{0.05} (manufactured by Japan Metals & Chemicals Co., Ltd., average particle size: 8.3 µm)
B5: Nickel-aluminum-iron alloy with a composition formula of Al₃Ni_{1.95}Fe_{0.05} (manufactured by Japan Metals & Chemicals Co., Ltd., average particle size: 16 µm)
B6: Nickel-aluminum-iron alloy with a composition formula of Al₃Ni_{1.95}Fe_{0.05} (manufactured by Japan Metals & Chemicals Co., Ltd., average particle size: 38 µm)
B7: Nickel-aluminum-iron alloy with a composition formula of Al₃Ni_{1.95}Fe_{0.05} (manufactured by Japan Metals & Chemicals Co., Ltd., average particle size: 85 µm)
It should be noted that B3 contains Ni and Al at approximately 1:1 (mass ratio).

### <<Raw Material for Metal Particles>>

C1: Nickel particles (manufactured by Kojundo Chemical Laboratory Co., Ltd., Ni Nickel (NIE10PB)) (average particle size: 2 to 3 µm)
C2: Nickel particles (manufactured by Kojundo Chemical Laboratory Co., Ltd., NIE11PB) (average particle size: 3 to 5 µm)

### <<Others>>

Thickening agent: CMC (manufactured by DKS Co., Ltd., CELLOGEN EP)
Solvent: Water

### <Water Electrolysis Electrode>

### (No.1)

A slurry was prepared by mixing Raney Alloy B1, Raw Material C1 for metal particles, CMC, and water. The mass ratio between Raney Alloy B1 and Raw Material C1 for metal particles is indicated under "B:C (wt%)" in Table 1. The proportion of the solvent in the slurry was 24% by mass or more and 40% by mass or less.

Both surfaces of Substrate A were coated with the slurry by a die coater. After coating, the slurry remaining on the surfaces of Substrate A was scraped off with a spatula.

Substrate A including the slurry was dried at 80°C for 60 minutes.

Substrate A after being dried was fired at 700°C for 2 hours.

Substrate A after being fired was immersed in a 14 mol/L sodium hydroxide aqueous solution at 125°C for 3 hours. Then, Substrate A was washed with water and oxidized using a hydrogen peroxide solution to thereby produce a water electrolysis electrode of No. 1.

### (No. 2)

A water electrolysis electrode of No. 2 was produced by the same method as the one for No. 1 except that Raney Alloy B3 was used.

### (Nos. 3 to 10)

Water electrolysis electrodes of Nos. 3 to 10 were produced by the same method as the one for No. 1 except that the mixing ratio between Raney Alloy B1 and Raw Material C1 for metal particles was changed to respective ratios indicated in Table 1, and Substrate A after being dried was pressed to have a thickness of 0.4 mm.

### (No. 11)

A water electrolysis electrode of No. 11 was produced by the same method as the one for No. 1 except that Raney Alloy B2 was used, the mixing ratio between Raney Alloy B2 and Raw Material C1 for metal particles was changed to the ratio indicated in Table 1, and Substrate A after being dried was pressed to have a thickness of 0.4 mm.

### (Nos. 12 to 18)

Water electrolysis electrodes of Nos. 12 to 18 were produced by the same method as the one for No. 1 except that the mixing ratio between Raney Alloy B1 and Raw Material C1 for metal particles was changed to respective ratios indicated in Table 1.

### <Analysis>

The first Al/Ni ratio and the second Al/Ni ratio of the water electrolysis electrode of each No. were determined. Specifically, a part of the water electrolysis electrode was embedded in a resin, and a cross section having been surface-treated using a cross-section polisher was analyzed by SEM-EDX. The results are shown in Table 1. The results in Table 1 show an average value of 3 arbitrary points extracted from the cross section.

**[Table 1]**

| No. | Raney alloy | B:C (wt%) | thickness (mm) | 1st Al/Ni | 2nd Al/Ni |
|---|---|---|---|---|---|
| 1 | B1 | 22:78 | 1.2 | 0.482 | 0.335 |
| 2 | B3 | 22:78 | 1.2 | 0.635 | 0.309 |
| 3 | B1 | 100:0 | 0.4 | 0.332 | 0 |
| 4 | B1 | 73:27 | 0.4 | 0.539 | 0.328 |
| 5 | B1 | 52:48 | 0.4 | 0.448 | 0.320 |
| 6 | B1 | 35:65 | 0.4 | 0.509 | 0.342 |
| 7 | B1 | 22:78 | 0.4 | 0.590 | 0.344 |
| 8 | B1 | 10:90 | 0.4 | 0.414 | 0.391 |
| 9 | B1 | 5:95 | 0.4 | 0.632 | 0.362 |
| 10 | B1 | 0:100 | 0.4 | 0 | 0 |
| 11 | B2 | 22:78 | 0.4 | 0.598 | 0.331 |
| 12 | B1 | 100:0 | 1.2 | 0.318 | 0 |
| 13 | B1 | 73:27 | 1.2 | 0.544 | 0.358 |
| 14 | B1 | 62:38 | 1.2 | 0.444 | 0.343 |
| 15 | B1 | 52:48 | 1.2 | 0.401 | 0.333 |
| 16 | B1 | 44:56 | 1.2 | 0.502 | 0.369 |
| 17 | B1 | 35:65 | 1.2 | 0.533 | 0.310 |
| 18 | B1 | 10:90 | 1.2 | 0.420 | 0.352 |

### <Test Example 1>

In Test Example 1, the following evaluation was performed on Nos. 1, 2, and 7 in which the Raney alloy and the raw material for metal particles were mixed at the same mass ratio.

### <<Evaluation>>

In order to evaluate the performance of each of the obtained water electrolysis electrodes to serve as an anode for water electrolysis, a potential cycling durability test was performed. Specifically, a 7 mol/L potassium hydroxide aqueous solution was used as an electrolyte solution, and a nickel mesh to serve as a counter electrode and the water electrolysis electrode of each of Nos. 1, 2, and 7 were immersed in the electrolyte solution. A mercury-mercuric oxide electrode to be used as a reference electrode was connected to the electrolyte solution using a liquid junction. Before and after the potential cycling durability test, the potential of the working electrode was swept at 1 mV/s relative to the reference electrode, and oxygen evolution current relative to the electrode potential was measured. The value of current when the anode potential was 1.5 V (vs. reversible hydrogen electrode) was read and used as an index of oxygen evolution activity. As the potential cycling durability test, a control process of holding at 1.5 V (vs. reversible hydrogen electrode) for 1 minute and then holding at 0 V (vs. reversible hydrogen electrode) for 1 minute was repeated 1500 times.

### (Current Density)

Before and after the potential cycling durability test, oxygen evolution current was measured, and the value of current when the anode potential was 1.5 V (vs. reversible hydrogen electrode) was read. The results are shown in Table 2. The fact that the current density is larger means that the activity of the electrode to serve as an anode for water electrolysis is higher.

### (Catalyst Portion Residual Rate)

The catalyst portion residual rate after completion of the potential cycling durability test was calculated based on the following Formula (i), where X (mg/cm²) is the weight per unit area of the water electrolysis electrode before the potential cycling durability test, and Y (mg/cm²) is the weight per unit area of the water electrolysis electrode after completion of the potential cycling durability test. The results are shown in Table 2. The fact that the catalyst portion residual rate is less than 100% means that the catalyst portion has fallen off, that is, the durability has been deteriorated. The fact that the catalyst portion residual rate is 100% means that the catalyst portion has not been reduced after the potential cycling durability test, relative to the catalyst portion before the test, and the durability is excellent. It should be noted that if a part of the catalyst portion is oxidized due to the potential cycling durability test, the catalyst portion residual rate may be 100% or more; however, the catalyst portion is maintained without falling off and the durability is not affected by this. $Catalyst portion residual rate = Y / X \times 100$ (i)

**[Table 2]**

| No. | current density after test (mA/cm²) | catalyst portion residual rate (%) |
|---|---|---|
| 1 | 405 | 103 |
| 2 | 322 | 98 |
| 7 | 233 | 105 |

### <<Results>>

As shown in Table 2, as to the current density after the potential cycling durability test for No. 1 and No. 2 having the same thickness, No. 1 exhibited a larger value of the current density than No. 2. This is considered to be due to the structure of the Raney nickel particles included in the water electrolysis electrode. Specifically, while Raney nickel particles included in No. 1 are made of Raney Alloy B1 with a composition formula of Al₃Ni₂ where the proportion of Al is higher than that of Ni, the Raney nickel particles included in No. 2 are made of Raney Alloy B3 in which the proportion of Ni and the proportion of Al are almost the same. Raney nickel particles are produced by eluting Al from a Raney alloy, and therefore, the higher the proportion of Al in the Raney alloy, the higher the voidage of the Raney nickel particles from which Al has been eluted and thus the higher the activity of the catalyst portion.

Moreover, as shown in Table 1, respective second Al/Ni ratios of No. 1 and No. 2 were almost the same. In contrast, the first Al/Ni ratio of No. 1 is lower than that of No. 2, and therefore, it is considered that a larger amount of Al has been eluted from No. 1 relative to No. 2. Accordingly, No. 1 has a higher voidage of the Raney nickel particles after Al elution than No. 2, and has higher activity of the catalyst portion (current density after the test), as shown in Table 2. Furthermore, in general, even when water electrolysis electrodes have the same weight per unit area, one of the water electrolysis electrodes that has a larger thickness has a higher voidage and accordingly has a larger specific surface area than the other. As a result, the former water electrolysis electrode has higher catalytic activity and also a higher current density. Therefore, it is considered that No. 7, which is thinner than No. 1 and No. 2, has the smallest current density.

Moreover, the catalyst portion residual rate of No. 1 and No. 7 exceeded 100%. It is therefore considered that No. 1 and No. 7 have excellent durability.

### <Test Example 2>

In Test Example 2, the following evaluation was performed using Nos. 3 to 11.

### <<Evaluation>>

In order to evaluate the performance of each of the obtained water electrolysis electrodes to serve as an anode for water electrolysis, a potential cycling durability test was performed. The test method is the same as that of Test Example 1.

### (Current Density)

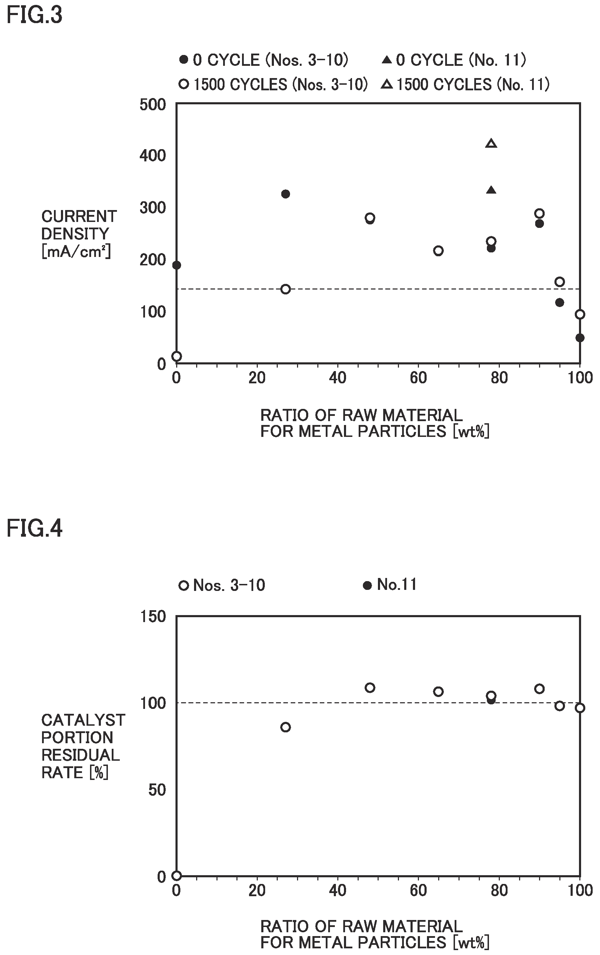

The current density before the potential cycling durability test and after completion of the potential cycling durability test was measured. The results are shown in Table 3 and Fig. 3. The water electrolysis electrode with a current density of 150 mA/cm² or more was regarded as a water electrolysis electrode exhibiting good activity.

### (Catalyst Portion Residual Rate)

The catalyst portion residual rate after completion of the potential cycling durability test was calculated based on the above Formula (i). The results are shown in Table 3 and Fig. 4.

**[Table 3]**

| No. | current density before test (mA/cm²) | current density after test (mA/cm²) | catalyst portion residual rate (%) |
|---|---|---|---|
| 3 | 187 | 12 | 0 |
| 4 | 323 | 151 | 86 |
| 5 | 274 | 280 | 109 |
| 6 | 215 | 217 | 107 |
| 7 | 221 | 233 | 105 |
| 8 | 287 | 268 | 108 |
| 9 | 116 | 160 | 99 |
| 10 | 48 | 94 | 97 |
| 11 | 330 | 419 | 103 |

### <<Results>>

As shown in Table 3 and Fig. 3, in Nos. 4 to 8 and 11, the current density before the potential cycling durability test and/or after completion of the potential cycling durability test was 150 mA/cm² or more. Moreover, in Nos. 5 to 8 and 11, the current density after completion of the potential cycling durability test was larger than the current density before the potential cycling durability test, or the current density was maintained even after completion of the potential cycling durability test. Furthermore, in Nos. 5 to 8 and 11, the current density before the potential cycling durability test and after completion of the potential cycling durability test was 200 mA/cm² or more, which was more favorable.

Moreover, as shown in Table 3 and Fig. 4, in Nos. 5 to 8 and 11, the catalyst portion residual rate exceeded 100%. Thus, Nos. 5 to 8 and 11 are considered as exhibiting good activity and also having excellent durability.

### <Test Example 3>

In Test Example 3, the following evaluation was performed using Nos. 1 and 12 to 18.

### <<Evaluation>>

In order to evaluate the performance of each of the obtained water electrolysis electrodes to serve as a cathode for water electrolysis, a potential cycling durability test was performed. Specifically, a 7 mol/L potassium hydroxide aqueous solution was used as an electrolyte solution, and a nickel mesh to serve as a counter electrode and the water electrolysis electrode of each of Nos. 1 and 12 to 18 were immersed in the electrolyte solution. A mercury-mercuric oxide electrode to be used as a reference electrode was connected to the electrolyte solution using a liquid junction. Before and after the potential cycling durability test, the potential of the working electrode was swept at 1 mV/s relative to the reference electrode, and hydrogen evolution current relative to the electrode potential was measured. The value of current when the cathode potential was -0.15 V (vs. reversible hydrogen electrode) was read and used as an index of hydrogen evolution activity. As the potential cycling durability test, a control process of holding at -0.1 V (vs. reversible hydrogen electrode) for 1 minute and then holding at 0.4 V (vs. reversible hydrogen electrode) for 1 minute was repeated 1000 times.

### (Current Density)

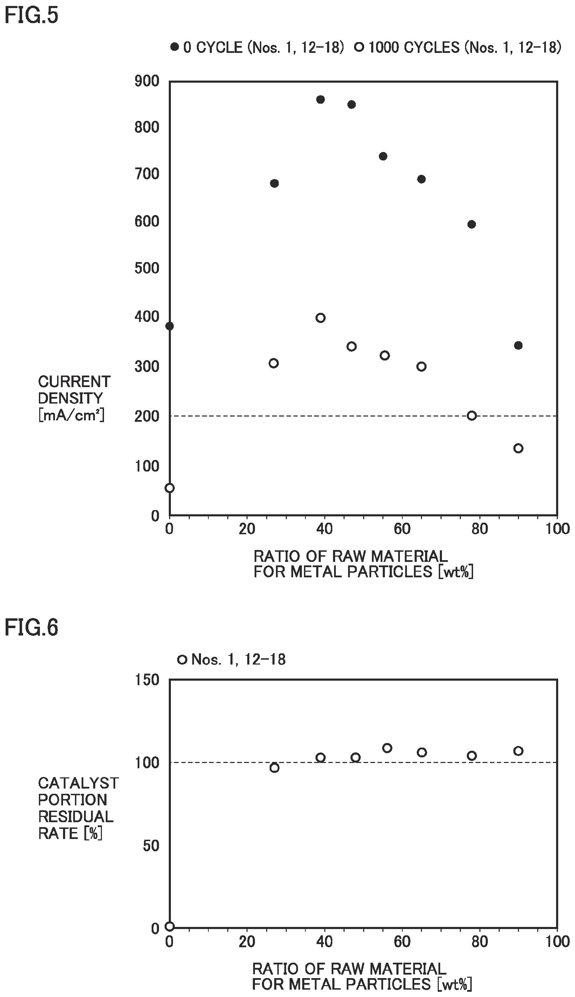

The current density before the potential cycling durability test and after the potential cycling durability test was measured. The results are shown in Table 4 and Fig. 5. The water electrolysis electrode with a current density of 200 mA/cm² or more was regarded as a water electrolysis electrode exhibiting good activity.

### (Catalyst Portion Residual Rate)

The catalyst portion residual rate after completion of the potential cycling durability test was calculated based on the above Formula (i). The results are shown in Table 4 and Fig. 6.

**[Table 4]**

| No. | current density before test (mA/cm²) | current density after test (mA/cm²) | catalyst portion residual rate (%) |
|---|---|---|---|
| 1 | 605 | 200 | 104 |
| 12 | 380 | 59 | 3 |
| 13 | 685 | 300 | 96 |
| 14 | 864 | 392 | 103 |
| 15 | 849 | 336 | 103 |
| 16 | 727 | 317 | 110 |
| 17 | 690 | 292 | 106 |
| 18 | 336 | 138 | 107 |

### <<Results>>

As shown in Table 4 and Fig. 5, in Nos. 1 and 12 to 18, the current density before the potential cycling durability test and/or after completion of the potential cycling durability test was 200 mA/cm² or more. Moreover, in Nos. 1 and 13 to 17, the current density before the potential cycling durability test and after completion of the potential cycling durability test was 200 mA/cm² or more, which was more favorable.

Moreover, as shown in Table 4 and Fig. 6, in Nos. 1 and 14 to 18, the catalyst portion residual rate exceeded 100%. Thus, Nos. 1 and 14 to 18 are considered as exhibiting good activity and also having excellent durability.

### <Test Example 4>

In Test Example 4, the following evaluation was performed using the following water electrolysis electrodes.

### (No. 19)

A water electrolysis electrode of No. 19 was produced by the same method as the one for No. 1 except that Raney Alloy B4 was used, the mixing ratio between Raney Alloy B4 and Raw Material C1 for metal particles was changed to 22:78, and Substrate A after being dried was pressed to have a thickness of 0.6 mm.

### (No. 20)

A water electrolysis electrode of No. 20 was produced by the same method as the one for No. 1 except that Raney Alloy B5 was used, the mixing ratio between Raney Alloy B5 and Raw Material C1 for metal particles was changed to 22:78, and Substrate A after being dried was pressed to have a thickness of 0.6 mm.

### (No. 21)

A water electrolysis electrode of No. 21 was produced by the same method as the one for No. 1 except that Raney Alloy B2 was used, the mixing ratio between Raney Alloy B2 and Raw Material C1 for metal particles was changed to 22:78, and Substrate A after being dried was pressed to have a thickness of 0.6 mm.

### (No. 22)

A water electrolysis electrode of No. 22 was produced by the same method as the one for No. 1 except that Raney Alloy B7 was used, the mixing ratio between Raney Alloy B7 and Raw Material C1 for metal particles was changed to 22:78, and Substrate A after being dried was pressed to have a thickness of 0.6 mm.

### <<Evaluation>>

In order to evaluate the influence of the average particle size of the Raney alloy (Raney nickel particles) on an anode for water electrolysis, a potential cycling durability test was performed. The method of the test is the same as that of Test Example 1.

### (Current Density)

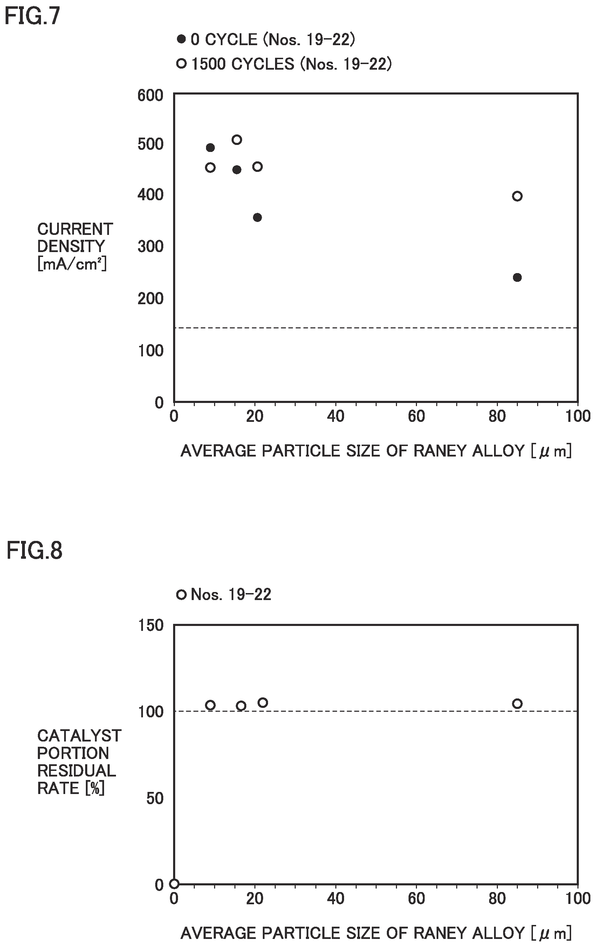

The current density before the potential cycling durability test and after completion of the potential cycling durability test was measured. The results are shown in Table 5 and Fig. 7. The water electrolysis electrode with a current density of 150 mA/cm² or more was regarded as a water electrolysis electrode exhibiting good activity.

### (Catalyst Portion Residual Rate)

The catalyst portion residual rate after completion of the potential cycling durability test was calculated based on the above Formula (i). The results are shown in Table 5 and Fig. 8.

**[Table 5]**

| No. | current density before test (mA/cm²) | current density after test (mA/cm²) | catalyst portion residual rate (%) |
|---|---|---|---|
| 19 | 493 | 453 | 104 |
| 20 | 442 | 516 | 103 |
| 21 | 352 | 458 | 107 |
| 22 | 245 | 396 | 105 |

### <<Results>>

As shown in Table 5 and Fig. 7, in Nos. 19 to 22, the current density before the potential cycling durability test and after completion of the potential cycling durability test was 200 mA/cm² or more. Moreover, in Nos. 20 to 22, the current density after completion of the potential cycling durability test had a larger value than the current density before the potential cycling durability test. Furthermore, in No. 20 and No. 21, the current density before the potential cycling durability test was 300 mA/cm² or more, and the current density after completion of the potential cycling durability test was 400 mA/cm² or more.

Moreover, as shown in Table 5 and Fig. 8, in Nos. 19 to 22, the catalyst portion residual rate exceeded 100%. Thus, it is considered that an anode for water electrolysis exhibiting good activity and durability can be obtained by setting the average particle size of the Raney alloy (Raney nickel particles) within an appropriate range.

### <Test Example 5>

In Test Example 5, the following evaluation was performed using the following water electrolysis electrodes.

### (No. 23)

A water electrolysis electrode of No. 23 was produced by the same method as the one for No. 1 except that Raney Alloy B5 was used and the mixing ratio between Raney Alloy B5 and Raw Material C1 for metal particles was changed to 52:48.

### (No. 24)

A water electrolysis electrode of No. 24 was produced by the same method as the one for No. 1 except that Raney Alloy B2 was used and the mixing ratio between Raney Alloy B2 and Raw Material C1 for metal particles was changed to 52:48.

### (No. 25)

A water electrolysis electrode of No. 25 was produced by the same method as the one for No. 1 except that Raney Alloy B6 was used and the mixing ratio between Raney Alloy B6 and Raw Material C1 for metal particles was changed to 52:48.

### (No. 26)

A water electrolysis electrode of No. 26 was produced by the same method as the one for No. 1 except that Raney Alloy B7 was used and the mixing ratio between Raney Alloy B7 and Raw Material C1 for metal particles was changed to 52:48.

### <<Evaluation>>

In order to evaluate the influence of the average particle size of the Raney alloy (Raney nickel particles) on a cathode for water electrolysis, a potential cycling durability test was performed. The method of the test is the same as that of Test Example 3.

### (Current Density)

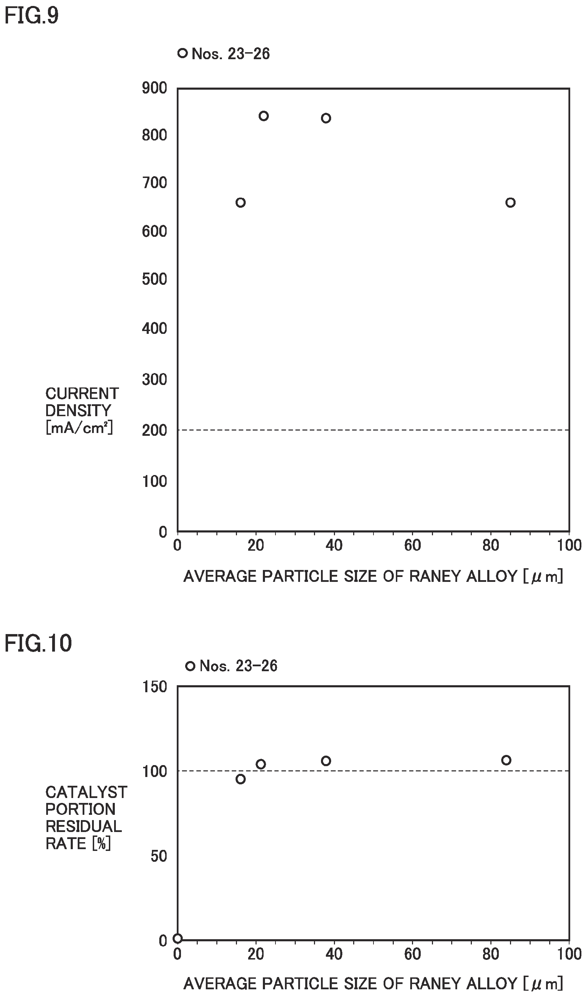

The current density before the potential cycling durability test was measured. The results are shown in Table 6 and Fig. 9. The water electrolysis electrode with a current density of 200 mA/cm² or more was regarded as a water electrolysis electrode exhibiting good activity.

### (Catalyst Portion Residual Rate)

The catalyst portion residual rate after completion of the potential cycling durability test was calculated based on the above Formula (i). The results are shown in Table 6 and Fig. 10.

**[Table 6]**

| No. | current density before test (mA/cm²) | catalyst portion residual rate (%) |
|---|---|---|
| 23 | 659 | 95 |
| 24 | 849 | 103 |
| 25 | 836 | 105 |
| 26 | 661 | 105 |

### <<Results>>

As shown in Table 6 and Fig. 9, in Nos. 23 to 26, the current density before the potential cycling durability test was 200 mA/cm² or more. Moreover, in Nos. 24 and 25, the current density after completion of the potential cycling durability test was 800 mA/cm² or more.

Moreover, as shown in Table 6 and Fig. 10, in Nos. 24 to 26, the catalyst portion residual rate exceeded 100%. Thus, it is considered that a cathode for water electrolysis exhibiting good activity and durability can be obtained by setting the average particle size of the Raney alloy (Raney nickel particles) within an appropriate range.

### <Test Example 6>

In Test Example 6, the following evaluation was performed using the following water electrolysis electrodes.

### (No. 27)

A water electrolysis electrode of No. 27 was produced by the same method as the one for No. 1 except that Raney Alloy B2 was used, the mixing ratio between Raney Alloy B2 and Raw Material C1 for metal particles was changed to 52:48, and Substrate A after being dried was pressed to have a thickness of 0.6 mm.

### (No. 28)

A water electrolysis electrode of No. 28 was produced by the same method as the one for No. 27 except that Raw Material C2 for metal particles was used.

### <<Evaluation>>

In order to evaluate the influence of the average particle size of the raw material for metal particles (metal particles) on an anode for water electrolysis, a potential cycling durability test was performed. The test method is the same as that of Test Example 1.

### (Current Density)

The current density before the potential cycling durability test and after completion of the potential cycling durability test was measured. The results are shown in Table 7. The water electrolysis electrode with a current density of 150 mA/cm² or more was regarded as a water electrolysis electrode exhibiting good activity.

### (Catalyst Portion Residual Rate)

The catalyst portion residual rate after completion of the potential cycling durability test was calculated based on the above Formula (i). The results are shown in Table 7.

**[Table 7]**

| No. | current density before test (mA/cm²) | current density after test (mA/cm²) | catalyst portion residual rate (%) |
|---|---|---|---|
| 27 | 619 | 488 | 112 |
| 28 | 163 | 7 | 12 |

### <<Results>>

As shown in Table 7, in No. 27, the current density before the potential cycling durability test and after completion of the potential cycling durability test was 200 mA/cm² or more. In contrast, in No. 28, while the current density before the potential cycling durability test was 200 mA/cm² or more, the current density after completion of the potential cycling durability test was significantly smaller than the one before the test.

Moreover, as shown in Table 7, in No. 27, the catalyst portion residual rate exceeded 100%. In contrast, in No. 28, the catalyst portion hardly remained. Thus, it is considered that an anode for water electrolysis exhibiting good activity and durability can be obtained by setting the average particle size of the raw material for metal particles (metal particles) within an appropriate range.

### <Test Example 7>

In Test Example 7, the following evaluation was performed using No. 27 and No. 28.

### <<Evaluation>>

In order to evaluate the influence of the average particle size of the raw material for metal particles (metal particles) on a cathode for water electrolysis, a potential cycling durability test was performed. The test method is the same as that of Test Example 3.

### (Current Density)

The current density before the potential cycling durability test and after completion of the potential cycling durability test was measured. The results are shown in Table 8. The water electrolysis electrode with a current density of 200 mA/cm² or more was regarded as a water electrolysis electrode exhibiting good activity.

### (Catalyst Portion Residual Rate)

The catalyst portion residual rate after completion of the potential cycling durability test was calculated based on the above Formula (i). The results are shown in Table 8.

**[Table 8]**

| No. | current density before test (mA/cm²) | current density after test (mA/cm²) | catalyst portion residual rate (%) |
|---|---|---|---|
| 27 | 849 | 336 | 103 |
| 28 | 585 | 7 | 3 |

### <<Results>>

As shown in Table 8, in No. 27, the current density before the potential cycling durability test and after completion of the potential cycling durability test was 200 mA/cm² or more. In contrast, in No. 28, while the current density before the potential cycling durability test was 200 mA/cm² or more, the current density after completion of the potential cycling durability test was significantly smaller than the one before the test.

Moreover, as shown in Table 8, in No. 27, the catalyst portion residual rate exceeded 100%. In contrast, in No. 28, the catalyst portion hardly remained. Thus, it is considered that a cathode for water electrolysis exhibiting good activity and durability can be obtained by setting the average particle size of the raw material for metal particles (metal particles) within an appropriate range.

### [Aspects]

Technical ideas that can be seen from the above embodiment are further described in the following.

### (Aspect 1)

A water electrolysis electrode including:
a substrate; and
a catalyst portion, wherein
the catalyst portion includes:
   Raney nickel particles; and
   metal particles containing nickel as a main component,
the metal particles are in contact with the Raney nickel particles,
the metal particles contain aluminum, and
a ratio of a total number of moles of aluminum to a total number of moles of nickel in the Raney nickel particles is larger than a ratio of a total number of moles of aluminum to a total number of moles of nickel in the metal particles.

### (Aspect 2)

The water electrolysis electrode according to Aspect 1, wherein
an average particle size of the metal particles is smaller than an average particle size of the Raney nickel particles, and
the metal particles are each in contact with more than one of the Raney nickel particles.

### (Aspect 3)

The electrolysis electrode according to Aspect 1 or 2, wherein the substrate contains nickel or a nickel alloy as a main component.

### (Aspect 4)

A method for manufacturing a water electrolysis electrode, the method including:
a mixing step of obtaining a slurry by mixing a raw material for Raney nickel particles, a raw material for metal particles containing nickel as a main component, and a solvent;
a water electrolysis electrode precursor forming step of obtaining a water electrolysis electrode precursor by coating a substrate with the slurry; and
an alkali treatment step of obtaining a water electrolysis electrode including Raney nickel particles by treating the water electrolysis electrode precursor with an alkaline substance, wherein
a number of moles of aluminum contained in the raw material for the Raney nickel particles is larger than a number of moles of nickel contained in the raw material for the Raney nickel particles.

### (Aspect 5)

The method for manufacturing a water electrolysis electrode according to Aspect 4, wherein
the raw material for the Raney nickel particles is represented by a Formula (1):

Al₃Ni₍₂₋ₓ₎₎Mₓ (1)

in the Formula (1), M is at least one element selected from Mg, Si, Ti, Cr, Mn, Fe, Co, Cu, Ag, Pt, and Au, and x satisfies a relationship: 0 ≤ x ≤ 0.2.

### (Aspect 6)

The method for manufacturing a water electrolysis electrode according to Aspect 5, wherein the M includes at least Fe.

### (Aspect 7)

The method for manufacturing a water electrolysis electrode according to any one of Aspects 4 to 6, wherein
the raw material for the Raney nickel particles is represented by a Formula (2):

Al₃Ni_{(2-(y+z))}Fe_{y}Co_{z} (2)

in the Formula (2), y and z satisfy a relationship: 0 ≤ y ≤ 0.1 and 0 ≤ z ≤ 0.1.

### (Aspect 8)

The method for manufacturing a water electrolysis electrode according to any one of Aspects 4 to 7, wherein a ratio of the raw material for the metal particles to a total of the raw material for the Raney nickel particles and the raw material for the metal particles is 27% by mass or more and 95% by mass or less.

### (Aspect 9)

The method for manufacturing a water electrolysis electrode according to any one of Aspects 4 to 8, wherein the water electrolysis electrode precursor forming step further includes:
a drying step of drying the water electrolysis electrode precursor; and
a firing step of firing the water electrolysis electrode precursor after being subjected to the drying step.

The present embodiment and the present example are given by way of illustration in all respects. The present embodiment and the present example are not given by way of limitation. The technical scope of the present disclosure encompasses all variations equivalent in meaning and scope to the description in claims. For example, it is intended from the beginning that any features extracted from the present embodiment and the present example are combined in any manner.

### REFERENCE SIGNS LIST

1 substrate; 2 Raney nickel particle; 3 metal particle.

## Claims

1. A water electrolysis electrode comprising:
a substrate; and
a catalyst portion, wherein
the catalyst portion includes:
Raney nickel particles; and
metal particles containing nickel as a main component,
the metal particles are in contact with the Raney nickel particles,
the metal particles contain aluminum, and
a ratio of a total number of moles of aluminum to a total number of moles of nickel in the Raney nickel particles is larger than a ratio of a total number of moles of aluminum to a total number of moles of nickel in the metal particles.

2. The water electrolysis electrode according to claim 1, wherein
an average particle size of the metal particles is smaller than an average particle size of the Raney nickel particles, and
the metal particles are each in contact with more than one of the Raney nickel particles.

3. The water electrolysis electrode according to claim 1 or 2, wherein the substrate contains nickel or a nickel alloy as a main component.

4. A method for manufacturing a water electrolysis electrode, the method comprising:
a mixing step of obtaining a slurry by mixing a raw material for Raney nickel particles, a raw material for metal particles containing nickel as a main component, and a solvent;
a water electrolysis electrode precursor forming step of obtaining a water electrolysis electrode precursor by coating a substrate with the slurry; and
an alkali treatment step of obtaining a water electrolysis electrode including Raney nickel particles by treating the water electrolysis electrode precursor with an alkaline substance, wherein
a number of moles of aluminum contained in the raw material for the Raney nickel particles is larger than a number of moles of nickel contained in the raw material for the Raney nickel particles.

5. The method for manufacturing a water electrolysis electrode according to claim 4, wherein
the raw material for the Raney nickel particles is represented by a Formula (1):
Al₃Ni₍₂₋ₓ₎₎Mₓ (1)
in the Formula (1), M is at least one element selected from Mg, Si, Ti, Cr, Mn, Fe, Co, Cu, Ag, Pt, and Au, and x satisfies a relationship: 0 ≤ x ≤ 0.2.

6. The method for manufacturing a water electrolysis electrode according to claim 5, wherein the M includes at least Fe.

7. The method for manufacturing a water electrolysis electrode according to any one of claims 4 to 6, wherein
the raw material for the Raney nickel particles is represented by a Formula (2):
Al₃Ni_{(2-(y+z))}Fe_{y}Co_{z} (2)
in the Formula (2), y and z satisfy a relationship: 0 ≤ y ≤ 0.1 and 0 ≤ z ≤ 0.1.

8. The method for manufacturing a water electrolysis electrode according to any one of claims 4 to 7, wherein a ratio of the raw material for the metal particles to a total of the raw material for the Raney nickel particles and the raw material for the metal particles is 27% by mass or more and 95% by mass or less.

9. The method for manufacturing a water electrolysis electrode according to any one of claims 4 to 8, wherein the water electrolysis electrode precursor forming step further includes:
a drying step of drying the water electrolysis electrode precursor; and
a firing step of firing the water electrolysis electrode precursor after being subjected to the drying step.
